# EUROPÄISCHE PATENTSCHRIFT

(11) **EP 0 777 544 B1**
(45) Veröffentlichungstag und Bekanntmachung des Hinweises auf die Patenterteilung: **17.10.2001**
(21) Anmeldenummer: 95931214.1
(22) Anmeldetag: 28.08.1995
(51) Int. Cl.: B23B 41/02, B23B 29/02

(54) **VERFAHREN UND VORRICHTUNG ZUR BEEINFLUSSUNG DES VERLAUFS VON TIEFLOCHBOHRUNGEN**
METHOD AND DEVICE FOR INFLUENCING THE COURSE OF DEEP HOLE DRILLING
PROCEDE ET DISPOSITIF PERMETTANT DE CORRIGER LE DECENTRAGE LORS DE L'ALESAGE DE TROUS PROFONDS

(30) Priorität: 28.08.1994 DE 4430331
(43) Veröffentlichungstag der Anmeldung: 11.06.1997
(73) Patentinhaber: Schwäbische Hüttenwerke GmbH, 73433 Aalen-Wasseralfingen (DE)
(72) Erfinder: RITTWEGER, Wolfram, D-89551 Königsbronn (DE); ZAORALEK, Heinz-Michael, D-89551 Königsbronn (DE)
(74) Vertreter: Marx, Lothar, Dr.
(86) Internationale Anmeldenummer: EP9503389
(87) Internationale Veröffentlichungsnummer: WO9606701

(56) Entgegenhaltungen:
- DE-A- 3 308 029
- DE-A- 3 705 852
- DE-A- 3 720 837
- DE-C- 767 138
- US-A- 3 635 108

## Beschreibung

Die Erfindung betrifft eine Vorrichtung und Verfahren zur zerspanenden Bearbeitung von Tieflockbohrungen gemäß dem Oberbegriff des Patentanspruchs 1, bzw. 9, und wie aus DE-C-76713B bekannt.

Das Einbringen von geraden und möglichst genau ausgerichteten Tieflochbohrungen bei der spanenden Bearbeitung von Metallgegenständen wird für ein Verhältnis von Durchmesser zu Bohrungstiefe bis etwa 1:100 mit dem sogenannten BTA-Verfahren hinreichend gut beherrscht. Die Verbesserung der Richtungsstabilität und der Geradheit der Bohrung ist aber auch in diesem Größenbereich noch wünschenswert.

Bei sehr langen und dünnen Bohrungen sowie in inhomogenen Werkstoffen stellt das Verlaufen der Bohrungen, d.h. die Abweichung vom idealen Verlauf, jedoch ein besonderes Problem dar. Dies sei im folgenden am Beispiel sog. peripher gebohrter beheizter Walzen, wie sie bei der Papierherstellung und -veredelung eingesetzt werden, näher erläutert.

Bei derartigen Walzen werden wünschenswerterweise axialparallele Bohrungen dicht unter der Walzenoberfläche von einem flüssigen Wärmeträgermedium durchströmt und die Walzenoberfläche so auf eine erhöhte Betriebstemperatur gebracht. Dadurch lassen sich Verbesserungen der Qualität und der Wirtschaftlichkeit in der Herstellung und Veredelung von Papieren und anderen bahnförmigen Materialien erreichen. Bezogen auf den Walzenquerschnitt stellen die peripheren Bohrungen singuläre Wärmequellen dar. Um eine möglichst gleichmäßige Oberflächentemperatur der Walzen zu erreichen, sind möglichst viele periphere Bohrungen mit einem möglichst kleinen Bohrungsdurchmesser vorteilhaft. Dies gilt auch im Hinblick auf die thermische Verformung des Walzenquerschnitts im Betrieb.

Eine typische derartige beheizte Kalanderwalze hat z.B. einen Walzendurchmesser von 1.350 mm bei einer Länge des Walzenkörpers von 8.000 mm. Etwa 45 periphere Bohrungen mit einem Durchmesser von 32 mm sind auf einem Teilkreis von 1.220 mm Durchmesser angeordnet. Die peripheren Bohrungen müssen in einer solchen Walze jeweils in zwei Schritten von beiden Walzenenden bis etwa zur Walzenmitte hin gebohrt werden. Jedoch ist es häufig nicht möglich, sie so zu dimensionieren, daß das genannte Durchmesser/Bohrungstiefen-Verhältnis von 1:100 eingehalten werden kann. Die Bohrungen "verlaufen" deshalb, d.h., sie können von der geraden Verbindungslinie zwischen Ein- und Ausgang in nicht tolerierbarer Größe abweichen, und zwar in verschiedenen Richtungen - zur Seite (in Richtung auf die nächstliegende Bohrung), zur Walzenoberfläche oder zur Walzenmitte hin, in Kombination der genannten Abweichungen auch spiralförmig oder völlig undefiniert.

Es versteht sich ohne weitere Erläuterung, daß für einen möglichst störungsfreien Durchfluß des Wärmeträgermediums die zugehörigen Bohrungen in der Walzenmitte sich möglichst gut treffen sollten. Verschiedene Gründe sind zusätzlich auch dafür zu benennen, daß ein möglichst gerader Verlauf der peripheren Bohrungen erforderlich ist.

Insbesondere bei Kalanderwalzen aus Hartguß, einem vorzugsweise verwendeten Material, ist eine eindeutige Tendenz des Bohrers zu beobachten, in die Walze "hineinzutauchen", d.h. die Bohrungen haben in der Walzenmitte einen größeren Abstand zur Oberfläche als an den Walzenenden. Dadurch kommt es im Heizbetrieb der Walze zu einer niedrigeren Oberflächentemperatur in der Walzenmitte, weil dem Wärmestrom ein größerer Widerstand in Gestalt einer größeren Wanddicke entgegensteht.

Als weiterer unerwünschter Effekt wird angesehen, daß individuell streuende Bohrungsverläufe Unwuchten in die Walzen hineintragen, und zwar an der Stelle, wo sie sich am ungünstigsten auf die Wuchtgüte der Walze auswirken, in der Walzenmitte. Zusammen mit der Rundlaufverschlechterung kann die Walze bei hohen Betriebsgeschwindigkeiten Vibrationen verursachen und den Betrieb der Maschine erheblich stören.

Hauptursache für das "Eintauchen" des Bohrers ist die Struktur der Hartgußwalze. Sie weist eine äußerst harte "weiße" Schale auf und einen weicheren "grauen" Kern. Zwar wird beim Gußvorgang eine möglichst begrenzte Schreckung angestrebt, so daß die peripheren Bohrungen im "grauen" Bereich des Walzenquerschnitts angeordnet werden können, jedoch reicht die Schreckwirkung der Kokillen auch über die "weiße" Schale hinaus. Das Gefüge des "grauen" Bereichs hat eine um so höhere Festigkeit, je weiter außen man sich befindet. Auch sind vereinzelte mikroskopisch kleine harte karbidische Einlagerungen weiter außen häufiger als innen. Dem Bohrer steht damit außen ein größerer Widerstand entgegen als innen; er weicht in Richtung des weicheren Werkstoffes aus.

Es wird versucht, dem "Eintauchen" entgegenzusteuern, indem man vom Walzenende her zunächst in Richtung zur Walzenoberfläche hin bohrt.Die Bohrung nähert sich dabei auf den ersten 1.000 bis 2.000 mm zunächst der Oberfläche, bevor die Bohrrichtung wieder in Richtung Walzenmitte umschwenkt.Mit diesem Kunstgriff werden deutliche Verbesserungen erreicht. Bei Walzen mit über 8.000 mm Körperlänge ist das Ergebnis aber nicht zufriedenstellend.

Unvermeidliche Toleranzbereiche bei den Werkstoff- und Werkzeugparametern (Anbohren, Geometrie, Abnutzung, etc.) führen ebenfalls zu Streuungen bei den Bohrungsverläufen, deren Gesetzmäßigkeiten nicht immer vorherzusehen sind. Dies kann dann örtliche Temperaturunterschiede auf der Walzenoberfläche zur Folge haben. Die Walze verbiegt sich auf Grund unterschiedlicher Wärmedehnung und läuft weniger rund.

Auch in gleichmäßigem Material verlaufen Bohrungen, und zwar mit einer Abweichung von der Geraden, die mit zunehmender Bohrlänge im Quadrat zunimmt. Dessen Ursache ist wahrscheinlich der Umstand, daß die Bohrstange, die einen etwas kleineren Durchmesser als der Bohrkopf hat, unter dem Bohrdruck bei Erreichen der freien Knicklänge ausknickt. Die Bohrstange wird dann in der Bohrung taumeln und die Führungen des Bohrkopfes verlieren zwangsläufig an Wirkung. Einen Hinweis, daß diese Vermutung zutrifft, kann man daraus entnehmen, daß mit niedrigerem Bohrdruck eine bessere Geradheit der Bohrung erreicht werden kann, weil dann das Ausknicken später erfolgt. Niedrigerer Bohrdruck führt aber zur unerwünschten Verlängerung der Bohrzeiten.

Es sind nicht viele Vorschläge bekannt geworden, wie sich der Verlauf von Tieflochbohrungen verbessern lassen kann. Ein solcher Vorschlag lief darauf hinaus, das Ausknicken der Bohrstange von der Richtung des Bohrwerkzeuges dadurch zu entkoppeln, daß man den vorderen Teil der Bohrstange etwa 500 mm hinter dem Bohrkopf mit einem weiteren Satz Führungsleisten versieht, die an der Wand der Bohrung anliegen, und danach eine "weiche" Verbindung zur übrigen Bohrstange schafft, welche deren Taumelbewegung aufnehmen soll. Diese Konstruktion hat jedoch keine erkennbare Verbesserung gebracht.

Ein weiterer Vorschlag sieht vor, den Druck des Bohröls, welches zur Schmierung und zum Abtransport der Späne dient, mit einem umlauffrequenten Druckimpuls zu überlagern und so dem Bohrwerkzeug immer wieder einen Schub in cieselbe Richtung zu versetzen. Es ist nicht bekannt, ob dieser Vorschlag über Versuche je hinausgelangt ist.

Beide Lösungen sind auch bereits theoretisch nicht geeignet, einen Anbohrfehler zu Beginn der Bohrung zu korrigieren.

Wie bereits erwähnt, eine Vorrichtung zur zerspanenden Bearbeitung von Tieflochbohrungen gemäß dem Oberbegriff des Patentanspruchs 1 ist aus der DE-C-767138 bekannt. Nachteiligerweise kann bei dieser Vorrichtung der Verlauf der Tieflochbohrung bezüglich der Auslenkung nicht beeinflußt werden.

Aus der DE-C-3720837 ist es bekannt, eine Auslenkungskontrolle für Bohrköpfe vorzusehen. Die hier beschriebene Kontrollvorrichtung wird dazu eingesetzt, eine möglichst geringe oder keine Auslenkung im Verlauf der Tieflochbohrung zu erwirken. Eine gezielte Beeinflussung des Verlaufs der Tieflochbohrungen, insbesondere eines variablen Verlaufs, ist gemäß der in dieser Schrift beschriebenen Vorrichtung nicht vorgesehen.

Mit der im folgenden beschriebenen Erfindung wird es möglich, den Verlauf von Tieflochbohrungen bei spanender Bearbeitung gezielt zu beeinflussen. Dabei kommen sowohl eine ständig während der Bohrung wirkende Einrichtung als auch weitere laufende Beeinflussungen der Bohrrichtung in Abhängigkeit von Messungen des Bohrungsverlaufs zur Anwendung.

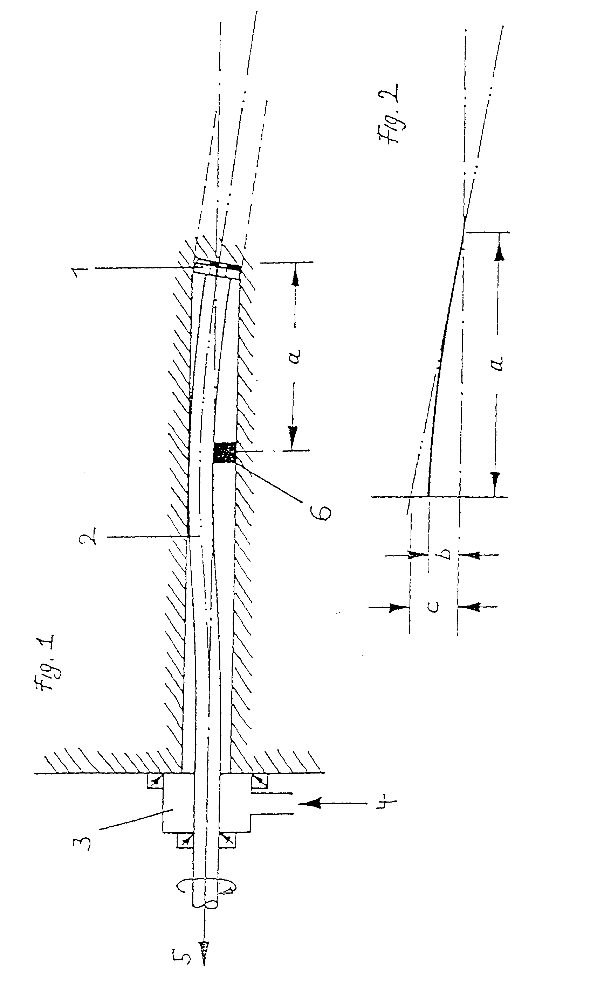

Dargestellt werden soll die Erfindung zunächst in Fig.1 am Beispiel eines BTA-Bohrers mit einem Durchmesser des Bohrkopfes (1) von 38 mm. Der Drehantrieb des Bohrkopfes erfolgt mittels einer hohlen Bohrstange (2) mit 28 mm Aussendurchmesser und 18 mm Innendurchmesser. Das Bohröl (4) wird dem Bohrkopf (1) über eine Zuführung (3), den sog. BOZA (Bohröl-Zuführ-Apparat), im Spalt zwischen Bohrung und Bohrstange (2) unter Druck zugeführt. Die Bohrspäne werden durch die Innenbohrung der Bohrstange mit dem abfließenden Bohröl abgeführt (5).

Die beschriebene Richtung des Bohrölflusses hat den Vorteil, daß die Führung des Bohrkopfes in spänefreiem Öl erfolgt und die Führungen darum weniger verschleißen. Es gibt aber auch sog. Einlippenbohrer, bei denen der Ölzufluß durch die Bohrstange erfolgt. Ein BOZA kann dann entfallen. Für die Erfindung selbst ist dieser Unterschied prinzipiell belanglos.

Wie oben beschrieben, würde ohne weitere Maßnahmen bei entsprechender freier Bohrstangenlänge (Bohrtiefe) die Bohrstange (2) in jedem Falle ausknicken und dann unkontrolliert in der Bohrung taumeln.

Erfindungsgemäß wird diese Taumelbewegung durch ein in den Spalt zwischen Bohrung und Bohrstange (2) definiert eingebrachtes Druckstück (6) unterdrückt. Die Bohrstange (2) wird so gezielt verbogen und dem Bohrkopf damit eine gewünschte Richtung aufgezwungen. Die Wirkungsweise soll am Beispiel einer zunächst geraden Bohrung von 38 mm Durchmesser dargestellt werden, bei welcher die erfindungsgemäße Korrekturvorrichtung dazu benutzt wird, den Bohrer von der geraden Richtung gezielt abzubringen. Selbstverständlich ist die eigentliche praktische Anwendung der Erfindung die, eine bereits verlaufende Bohrung in die gewunschte Richtung zurückzubringen, bzw. einen Verlauf in seiner Entstehung zu unterdrücken.

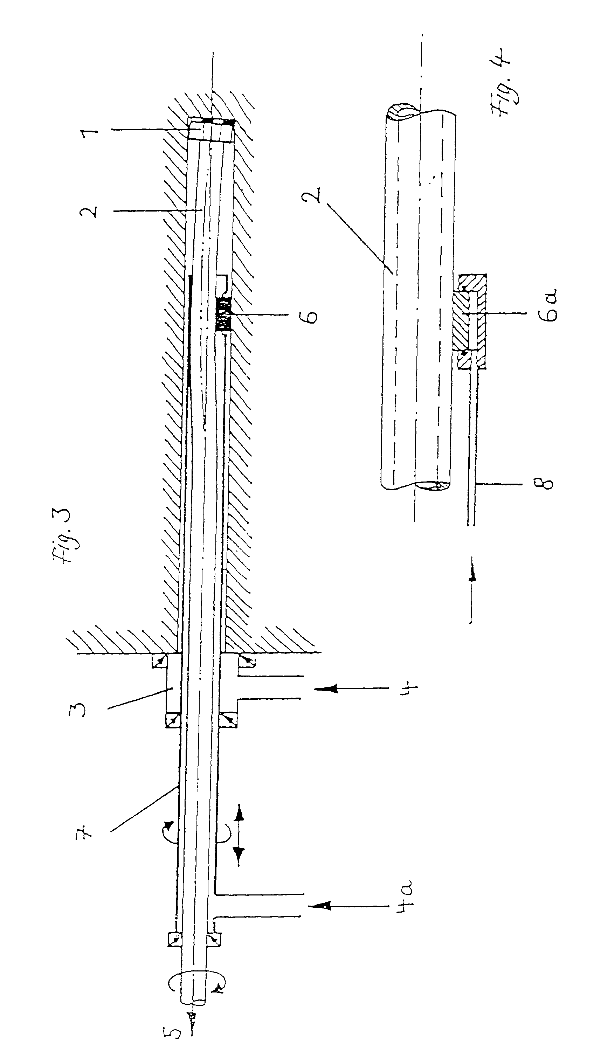

Im gewählten Beispiel (Fig.1 und 2) wird das Druckstück (6) in einer Ausnehmung eines Führungsrohres (nicht dargestellt) mit dem Abstand a = 500 mm zum Bohrkopf (1) so positioniert, daß es auf einer Seite an der Bohrungswand selbst anliegt und auf der anderen Seite die 28 mm starke Bohrstange (2) gegen die gegenüberliegende Bohrungswand drückt. Aus der Biegelinie der Bohrstange (Fig 2) folgt, daß sich am Bohrkopf ein Winkel entsprechend einem Dreieck einstellt, dessen Grundseite gleich dem Abstand Druckstück zu Bohrkopf a und dessen Höhe gleich dem 1,5-fachen der Auslenkung c ist. Auf 1.000 mm weiteren Bohrweg hochgerechnet würde im dargestellten Beispiel dann die Korrektur 9 mm betragen, wenn man unterstellt, daß der Bohrer in der neuen Richtung weiterbohrt.

Die Größe der Korrektur kann man entweder dadurch beeinflussen, daß man ein Druckstück geringerer Stärke verwendet oder den Abstand des Druckstückes vom Bohrkopf verändert.

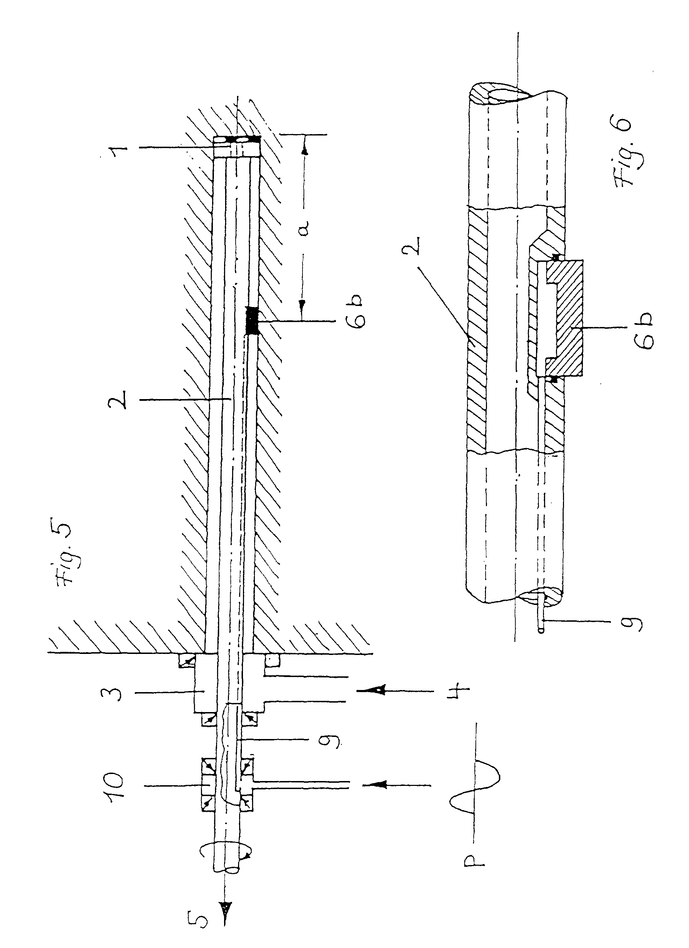

Eine kontinuierliche Veränderung des Abstandes eines Druckstückes (6) mit konstanter Stärke zum Bohrkopf (1) zeigt Fig.3, in der das Führungsrohr (7) zusätzlich dargestellt ist. Es ist in der Bohrung unabhängig von der Position des Bohrkopfes (1) in axialer Richtung beweglich ausgestaltet. Dazu wird das Führungsrohr (7) durch den BOZA (3) geführt und weiter hinten gegen die Bohrstange abgedichtet. Das Bohröl (4) kann dann sowohl über den BOZA als auch direkt in das Führungsrohr (4a) zugeführt werden.

In diesem Falle empfiehlt sich ein in axialer Richtung beweglicher Antrieb des Führungsrohres, mit dem dieses im Normalfall synchron zum Vorschub des Bohrkopfes bewegt wird. Zur Veränderung der Korrektur wird die Synchronisation unterbrochen und der Abstand neu eingestellt.

Vorteilhafterweise kann man, wie in Figur 4 dargestellt, ein Druckstück (6a) verwenden, dessen Stärke kontinuierlich oder in Stufen verändert werden kann. Dies kann beispielsweise durch eine dünne Druckölleitung (8) erfolgen, die im Führungsrohr (7) bis zum Druckstück (6a) geführt wird, das dann beispielsweise als hydraulischer Stempel oder als Druckkissen ausgeführt ist. Andere technische Lösungen für die Veränderung der Stärke des Druckstückes, wie z.B. durch Verschiebung von Keilen, sind denkbar. In Kombination von Stellung und Stärke des Druckstücks ergeben sich erheblich erweiterte Beeinflussungsmöglichkeiten für die Bohrrichtung, die hier nicht näher dargestellt werden, da sie vom Fachmann unter Anwendung ihm geläufiger technischer Regeln und Berechnungen erkannt werden können.

Durch eine Drehung des Führungsrohres (7) in der in Fig.3 bei (5) angezeigten Pfeilrichtung oder gegen diese ist es möglich, das Druckstück (6) in jede radiale Winkelposition zum Walzenkörper zu bringen. Damit sind Korrekturen des Bohrungsverlaufes in jede beliebige Richtung möglich. Dies ist insbesondere deswegen von Vorteil, weil sich beim Bohren von Schalenhartguß die beschriebene Inhomogenität des Werkstoffes zusätzlich in der Weise auswirkt, daß der Bohrer auch in Umfangsrichtung verläuft. Zusammen mit dem"Eintauchen" des Bohrers spricht man vom sog. "Zwei-Uhr-Effekt", weil die Resultierende aus beiden Abweichungen in Richtung der Zwei eines Zifferblattes weist, wenn man bezogen auf den Walzenquerschnitt in der Sechs-Uhr-Position ein Tiefloch einbringt. Es wird sich bei diesem Effekt also empfehlen, das Druckstück zweckmäßigerweise in eine "Acht-Uhr-Position" zu bringen, um den Bohrungsverlauf völlig zu beseitigen.

Die Drehbarkeit des Führungsrohrs (7) zur Beeinflussung der Korrekturrichtung ist aber weit darüber hinaus bedeutsam, weil sie die Möglichkeit gibt, das Verlaufen der Bohrung in alle Richtungen je nach Erscheinungsbild zu korrigieren.

Gemäß einer weiteren Ausführung der Erfindung, dargestellt in Fig.5 und 6, ist es möglich, auf das Führungsrohr zu verzichten, wenn man das Druckstück (6b) in die Bohrstange (2) integriert. Der Druck des Druckstückes (6b) auf die Bohrungswand wird beispielsweise durch eine in der Bohrstange (2) mitlaufende separate Druckölleitung (9) umlauffrequent variiert, die über eine Drehdurchführung (10) mit einem Druckvariator (nicht dargestellt) verbunden ist. Allerdings wird diese Weise der Beeinflussung der Bohrrichtung weniger effektiv sein als die zuvor dargestellten, weil die gewünschte Biegung der Bohrstange (2) nur während des Teils ihrer Umdrehung erzielt wird, in dem sie sich beim Taumeln an der der fehlerhaften Abweichung der Bohrung abgewandten Seite der Bohrungswand befindet.

Eine vollständige Kontrolle über den Bohrungsverlauf wird dadurch gewonnen, daß man in regelmäßigen Abständen oder kontinuierlich die aktuelle Position des Bohrkopfes ermittelt. Dies läßt sich z.B. durch Ultraschallmessungen oder andere in einem Metallkörper wirksame berührungslose Meßverfahren bewerkstelligen. Mittels Rückkopplung der so festgestellten Abweichungen zur Korrektureinrichtung hin läßt sich ein fast idealer gerader Bohrungsverlauf, aber auch eine vorgegebene Bohrkurve automatisch erzeugen. Die erfindungsgemäßen Einrichtungen und Verfahren eignen sich damit insbesondere auch für die mechanisch und/oder elektronisch automatisierte Veriaufskorrektur.

Alle dargestellten Vorrichtungen und Verfahren sind naturgemäß nicht auf die Anwendung bei den beispielhaft zur Verdeutlichung herangezogenen Hartguß- und ähnlichen Walzen aus der Papierherstellung beschränkt. Sie sind grundsätzlich in allen Fällen anwendbar, in denen in einem harten Material, das nicht zwangsläufig metallischer Natur sein muß, diese aber meist aufweisen wird, lange und im Verhältnis zur Länge relativ dünne Bohrungen eingebracht werden sollen, ohne daß die Möglichkeit besteht, den Bohrkopf so zwangszuführen, daß er eine gerade oder andere vorgegebene Richtung beibehalten wird.

## Patentansprüche

1. Vorrichtung zur zerspanenden Bearbeitung von Tieflochbohrungen in metallischem oder nichtmetallischem Material
a) mit einem zerspanenden Bohrwerkzeug (1) mit einer oder mehreren Schneiden, welches formschlüssig mit der Spitze einer angetriebenen hohlen Bohrstange (2) mit einem Außendurchmesser kleiner als der Durchmesser der erzeugten Bohrung verbunden ist,
b) sowie einer Zuführung (3) von Flüssigkeit oder Druckgas (4) im Spalt zwischen Bohrstange (2) und erzeugter Bohrung für die Kühlung, Schmierung und den Abtransport der Bohrspäne und Ableitung der Flüssigkeit oder des Druckgases mit den Bohrspänen durch die hohle Bohrstange (2) oder
c) einer Fließrichtung der Flüssigkeit oder des Druckgases entgegengesetzt zu b),
**dadurch gekennzeichnet, daß**
d) zur Beeinflussung des Verlaufs der Tieflochbohrung in einem in der Position variabel einstellbaren Abstand (a) hinter dem Bohrwerkzeug (1) zwischen Bohrstange (2) und Innenwand der Bohrung ein Druckstück (6) positioniert ist, welches auf die Bohrstange (2) einen Druck ausübt und ihre radiale Auslenkung in eine vorgegebene Richtung bewirkt.

2. Vorrichtung nach Anspruch 1,
**dadurch gekennzeichnet, daß**
das Druckstück (6) durch eine aus der Bohrung herausgeführte Halterung (7), vorzugsweise ein Röhr mit einem Außendurchmesser geringfügig kleiner als der Bohrungsdurchmesser, in axialer Richtung und bezogen auf die Bohrung in jedem Winkel fixiert bzw. geführt wird.

3. Vorrichtung nach Anspruch 1,
**dadurch gekennzeichnet, daß**
die Stärke des Druckstückes (6) bzw. die durch dieses auf die Bohrstange (2) ausgeübte Kraft mittels hydraulischer, elektrischer, pneumatischer oder mechanischer Mittel veränderbar ist.

4. Vorrichtung nach Anspruch 1,
**dadurch gekennzeichnet, daß**
die Ansprüche 2 und 3 gemeinsam verwirklicht werden.

5. Vorrichtung nach Ansprüchen 1 oder 4,
**dadurch gekennzeichnet, daß**
das Führungsrohr (7) für das Druckstück (6) durch die Zuführung (3) für das Bohrfluid hindurch aus der Bohrung herausgeführt wird und die Zuführung sowohl gegen das Werkstück als auch gegen das Führungsrohr abgedichtet ist

6. Vorrichtung nach Ansprüchen 5,
**dadurch gekennzeichnet, daß**
das Führungsrohr (7) für das Druckstück (6) außerhalb der Bohrung gegen die Bohrstange abgedichtet ist und daß das Bohrfluid zusätzlich oder alternativ umschaltbar zwischen Führungsrohr (7) und Bohrstange (2) dem Bohrwerkzeug (1) zugeleitet wird.

7. Vorrichtung nach Anspruch 2,
**dadurch gekennzeichnet, daß**
das Druckstück (2b) mitdrehend in die Bohrstange (2) integriert ist und seine Stärke und/oder Druckkraft umlauffrequent periodisch mittels hydraulischer, elektrischer, pneumatischer oder mechanischer Mittel variiert werden kann.

8. Vorrichtung nach Anspruch 1 bis 7,
**dadurch gekennzeichnet, daß**
der Abstand a zwischen Bohrkopf (1) und Druckstück (6) praktisch gleich Null ist, das Druckstück also im oder am Bohrkopf selbst angebracht ist.

9. Verfahren der zerspanenden Bearbeitung zur Beeinflussung des Verlaufs von Tieflochbohrungen in metallischem oder nichtmetallischem Material, **dadurch gekennzeichnet, daß** die das Bohrwerkzeug (1) antreibende Bohrstange (2) mittels eines in Stärke und/oder Position variablen Druckstücks (6), welches zwischen Bohrstange (2) oder Bohrwerkzeug (1) angeordnet ist, einer Biegekraft unterworfen und gegenüber der Bohrung gezielt verstellt wird.

10. Verfahren gemäß Anspruch 9,
**dadurch gekennzeichnet, daß**
die Führung und Verstellung des Druckstücks (6) mittels eines, die Bohrstange (2) in geringem Abstand umhüllenden, Führungsrohrs erfolgt, welches in Längs- wie Drehrichtung beweglich und beliebig arretierbar ist.

11. Verfahren gemäß Ansprüchen 9 und 10,
**dadurch gekennzeichnet, daß**
die Variation von Stärke und/oder Druck des Druckstücks (6) mittels hydraulischer, elektrischer, pneumatischer oder mechanischer Mittel erfolgt.

12. Verfahren gemäß Ansprüchen 9 bis 11,
**dadurch gekennzeichnet, daß**
die Variation von Position und Stärke/Druck des Druckstückes (6) in Abhängigkeit von Messungen der Position des Bohrwerkzeuges (1) manuell oder automatisch geregelt nach einem vorgegebenen Soll-Verlauf erfolgt.

## Claims

1. A device for machining deep hole drilled passages in a metallic or non-metallic material comprising
a) a machining drill tool (1) including one or more cutting edges, said tool being positively connected to the tip of a driven hollow drill rod (2) having an outer diameter smaller than the diameter of the drilled passage produced,
b) and a feed (3) of liquid or compressed gas (4) in the gap between said drill rod (2) and said produced drilled passage for cooling, lubricating and removing the chips and discharging said liquid or compressed gas together with said chips through said hollow drill rod (2) or
c) a flow direction of said liquid or said compressed gas opposite to that of b),
**characterised in that**
d) for influencing the run of said deep hole drilled passage at a distance (*a*) variably adjustable in the position behind said drill tool (1) between said drill rod (2) and the inner wall of the drilled passage a pusher pad (6) is positioned, said pusher pad exerting a pressure on said drill rod (2) and affecting the radial deflection of said drill rod in a predetermined direction.

2. The device as set forth in claim 1, **characterised in that** said pusher pad (6) is fixed and/or guided axially and with respect to said drilled passage in each angle by a mount (7) brought out from said drilled passage, preferably by a tube having an outer diameter slightly smaller than the diameter of said drilled passage.

3. The device as set forth in claim 1, **characterised in that** the strength of said pusher pad (6) and/or the force exerted by said pusher pad on said drill rod (22) is variable by means of hydraulic, electrical, pneumatic or mechanical means.

4. The device as set forth in claim 1, **characterised in that** said claims 2 and 3 are realised in common.

5. The device as set forth in claims 1 or 4, **characterised in that** said guide tube (7) for said pusher pad (6) is brought out from said drilled passage through said feed (3) for the drilling liquid and said feed is sealed both with respect to the workpiece and to the guide tube.

6. The device as set forth in claim 5, **characterised in that** said guide tube (7) for said pusher pad (6) is sealed off outside of said drilled passage with respect to said drill rod and said drilling liquid is supplied to said drill tool (1) additionally or alternatively selectable between said guide tube (7) and said drill rod (2).

7. The device as set forth in claim 2, **characterised in that** said pusher pad (2b) is integrated in said drill rod (2) to rotate together therewith and the strength and/or pressure force of said pusher pad can be varied at the frequency of rotation periodically by means of hydraulic, electrical, pneumatic or mechanical means.

8. The device as set forth in any of the claims 1 to 7, **characterised in that** said distance *a* between said drill head(1) and said pusher pad (6) practically equals zero, said pusher pad thus being mounted in or on said drill head itself.

9. A machining method for influencing the run of deep hole drilled passages in a metallic or non-metallic material, **characterised in that** the drill rod (2) driving the drill tool (1) is subjected to a bending force and is adjusted with respect to said drilled passage by means of a pusher pad (6) variable in strength and/or position, said pusher pad being disposed between said drill rod (2) or said drill tool (1).

10. The method as set forth in claim 9, **characterised in that** guidance and adjustment of said pusher pad (6) is provided by means of a guide tube surrounding said drill rod (2) slightly spaced away therefrom, said guide tube being movable, and able to be arrested in any position longitudinally and rotationally.

11. The method as set forth in claims 9 and 10, **characterised in that** varying the strength and/or pressure of said pusher pad (6) is done by means of hydraulic, electrical, pneumatic or mechanical means.

12. The method as set forth in any of the claims 9 to 11, **characterised in that** varying the position and/or strength/pressure of said pusher pad (6) is done manually or automatically controlled in accordance with a predetermined target run in response to measuring the position of said drill tool (1).

## Revendications

1. Dispositif pour l'usinage avec enlèvement de copeaux de forures profondes dans des matériaux métalliques ou non-métalliques comportant
a) une tête de forage (1) avec enlèvement de copeaux, pourvue d'un ou de plusieurs tranchants et qui est reliée par concordance géométrique à la pointe d'une tige de forage (2) creuse, entraînée, dont le diamètre extérieur est inférieur au diamètre de la forure obtenue,
b) une admission (3) de liquide ou de gaz sous pression (4) dans l'intervalle entre la tige de forage (2) et la forure obtenue pour refroidir, lubrifier et enlever les copeaux de forage et évacuer le liquide ou le gaz comprimé avec les copeaux de forage par la tige de forage (2) creuse ou présentant
c) un sens d'écoulement du liquide ou du gaz comprimé contraire à b)
**caractérisé en ce que**
d) pour influencer le déroulement du forage en profondeur, une pièce de pression (6) est positionnée à une distance (a) en position réglable derrière la tête de forage (1) entre la tige de forage (2) et la paroi interne de la forure, laquelle pièce de pression exerce une pression sur la tige de forage (2) et exerce une modification radiale de son orientation dans un sens prédéterminé.

2. Dispositif suivant la revendication 2, **caractérisé en ce que** la pièce de pression (6) est fixée, respectivement guidée par un élément de fixation (7) sorti de la forure, de préférence un tube de diamètre extérieur légèrement inférieur au diamètre de la forure, en direction axiale et selon n'importe quelle inclinaison par rapport à la forure.

3. Dispositif suivant la revendication 1, **caractérisé en ce que** l'épaisseur ou la puissance de la pièce de pression (6) respectivement la force exercée par celle-ci sur la tige de forage (2) peut être modifiée par un moyen hydraulique, électrique, pneumatique ou mécanique.

4. Dispositif suivant la revendication 1, **caractérisé en ce que** les revendications 2 et 3 sont mises en oeuvre ensemble.

5. Dispositif suivant les revendications 1 ou 4, **caractérisé en ce que** le tube de guidage (7) pour la pièce de pression (6) est sorti de la forure par l'admission (3) utilisée pour le fluide de forage et **en ce que** l'admission est étanchée aussi bien vis-à-vis de la pièce d'ouvrage que vis-à-vis du tube de guidage.

6. Dispositif suivant la revendication 5, **caractérisé en ce que** le tube de guidage (7) pour la pièce de pression (6) est étanché à l'égard de la tige de forage à l'extérieur de la forure et **en ce que** le fluide de forage est amené à la tête de forage (1) en outre ou de manière commutable alternativement entre le tube de guidage (7) et la tige de forage (2).

7. Dispositif suivant la revendication 2, **caractérisé en ce que** la pièce de pression (2b) est intégrée dans la tige de forage (2) en pouvant tourner avec elle et **en ce que** son épaisseur ou sa puissance et/ou sa force de pression peuvent être amenées à varier périodiquement selon une fréquence de rotation par un moyen hydraulique, électrique, pneumatique ou mécanique.

8. Dispositif suivant les revendications 1 à 7, **caractérisé en ce que** la distance (a) entre la tête de forage (1) et la pièce de pression (6) est pratiquement égale à zéro, la pièce de pression étant placée dans ou sur la tête de forage même.

9. Procédé d'usinage avec enlèvement de copeaux pour influencer le déroulement de forages en profondeur dans des matériaux métalliques ou non-métalliques, **caractérisé en ce que** la tige de forage (2) entraînant la tête de forage (1) est soumise à une force de flexion et est décalée de manière intentionnelle par rapport à la forure au moyen d'une pièce de pression (6) variable en épaisseur ou puissance et/ou position, placée entre la tige de forage (2) ou la tête de forage (1).

10. Procédé suivant la revendication 9, **caractérisé en ce que** le guidage et le déplacement de la pièce de pression (6) ont lieu au moyen d'un tube de guidage entourant la tige du forage (2) à faible distance, lequel tube de guidage peut être arrêté à volonté et de manière mobile dans le sens de la longueur comme de la rotation.

11. Procédé suivant les revendications 9 et 10, **caractérisé en ce que** la variation de l'épaisseur ou de la puissance et/ou de la pression de la pièce de pression (6) a lieu par un moyen hydraulique, électrique, pneumatique ou mécanique.

12. Procédé suivant les revendications 9 et 10 **caractérisé en ce que** la variation de la position et de l'épaisseur ou la puissance/pression de la pièce de pression (6) est effectuée en fonction de mesures de la position de la tête de forage (1) par réglage manuel ou automatique selon des paramètres prédéfinis.
